**Europäisches Patentamt**

**European Patent Office**

**Office européen des brevets**

(19)

(11) Veröffentlichungsnummer : **0 080 009**
**B1**

(12) **EUROPÄISCHE PATENTSCHRIFT**

(45) Veröffentlichungstag der Patentschrift :
**09.07.86**

(21) Anmeldenummer : **82103286.9**

(22) Anmeldetag : **20.04.82**

(51) Int. Cl.⁴ : **B 62 D 55/20**

(54) **Gelenkbolzendichtung für eine Gleiskette.**

(30) Priorität : **21.11.81 DE 3146175**

(43) Veröffentlichungstag der Anmeldung :
**01.06.83 Patentblatt 83/22**

(45) Bekanntmachung des Hinweises auf die Patenterteilung : **09.07.86 Patentblatt 86/28**

(84) Benannte Vertragsstaaten :
**AT DE FR GB IT SE**

(56) Entgegenhaltungen :
**EP-A- 0 030 085**
**FR-A- 2 125 872**
**US-A- 3 336 086**
**US-A- 4 089 531**
**US-A- 4 240 642**
**US-A- 4 248 439**
**US-A- 4 274 682**

(73) Patentinhaber : **Firma Carl Freudenberg**
**Höhnerweg 4**
**D-6940 Weinheim/Bergstrasse (DE)**

(72) Erfinder : **Metzner, Hermann**
**Eichenweg 2**
**D-6942 Mörlenbach (DE)**
Erfinder : **Habel, Erich**
**Alfred-Delp-Strasse 2**
**D-6149 Fürth (DE)**
Erfinder : **Hoff, Karl**
**Mülforterstrasse 87**
**D-4050 Mönchengladbach 2 (DE)**
Erfinder : **Schumacher, Herbert**
**Am Wetzelsberg 55**
**D-6149 Gorxheimertal (DE)**

(74) Vertreter : **Weissenfeld-Richters, Helga, Dr.**
**Höhnerweg 2**
**D-6940 Weinheim/Bergstrasse (DE)**

## Beschreibung

Die Erfindung betrifft eine Gelenkbolzendichtung für eine Gleiskette, bestehend aus einem Stützring aus einem härteren, gummielastischen Werkstoff, der festsitzend in eine Gehäusebohrung eingepreßt ist und der an der dem abgedichteten Medium zugewandten Grundfläche der Gehäusebohrung anliegt, der ein Profil aufweist, das auf der Innenseite in Richtung des abgedichteten Mediums verlängert ist und in einen nach außen vorspringenden Lippenring übergeht, dessen Dichtlippe von einem innerhalb des Profils angeordneten und die Gehäusebohrung, den Stützring und den Lippenring berührenden Andrückring aus einem weicheren elastischen Werkstoff an die radiale Dichtfläche des relativ beweglichen Maschinenteiles angepreßt wird, wobei der Stützring eine im wesentlichen zylindrisch verlaufende Innenwandung aufweist.

Die Gelenkbolzen der Gleisketten von Geländefahrzeugen sind größtenteils ölgeschmiert und verbinden zumeist aus Gußstahl bestehende, grobstrukturierte Einzelglieder. Die Relativbewegung der aufeinandergleitenden Teile besteht aus einer Schwenkbewegung mit niedrigen Spitzengeschwindigkeiten zwischen längeren Unterbrechungen. Die größte Belastung einer in diesem Bereich eingesetzten Dichtung resultiert dementsprechend aus dem verschleißbedingten, starken Axialspiel der einzelnen Kettenglieder in Verbindung mit der Schmutzbelastung durch Erdreich unterschiedlichster Konsistenz.

Die Kettenbolzendichtung der eingangs genannten Art ist aus US-A-42 48 439 bekannt. Der Stützring ist zum Ausgleich des axialen Spiels durchgehend deformierbar, wobei der Nachteil in Kauf genommen werden muß, daß die Position der Dichtlippe bei einer axialen Zusammenpressung stark nach außen verschoben werden kann. Verstärkter Verschleiß und Eindringen von Schmutzpartikeln in den Dichtungsbereich kann hiervon die Folge sein. Der Vorgang wird weiter verstärkt durch ein Nachlassen der Andrückkräfte infolge eintretender Relaxationserscheinungen. Dichtungen der angegebenen Art müssen aus diesem Grunde in kurzen Abständen erneuert werden.

Der Erfindung liegt die Aufgabe zugrunde, eine Gelenkbolzendichtung für eine Gleiskette zu zeigen, die eine hochwertige Abdichtung weitgehend unabhängig von eintretenden Relaxationserscheinungen der verwendeten gummielastischen Werkstoffe gewährleistet.

Diese Aufgabe wird erfindungsgemäß durch eine Änderung der eingangs angesprochenen Gelenkbolzendichtung gelöst, die dadurch gekennzeichnet ist, daß der Außendurchmesser des Stützringes an der Übergangsstelle in den Lippenring kerbartig zu einer gelenkartig wirksamen Membrane verjüngt ist, und daß das Verhältnis aus dem mittleren, radialen Abstand der Membrane von der Dichtlippe und deren radialem Abstand von der Mittellinie der Anlagefläche des Andrückringes 0,7 bis 1,4 beträgt, wobei die Abmessungen und die Elastizität der Membrane mit den entsprechenden Werten des Andrückringes so abgestimmt sind, daß sich der axiale Abstand des Lippenringes ohne wesentliche Veränderung des Durchmessers der Dichtlippe vermindern läßt.

Der Stützring der vorgeschlagenen Gelenkbolzendichtung ist steif und robust ausgeführt und verhindert durch eine gelenkartig wirksame Membrane wirksam deren radiales Auswandern nach Außen bei einer axialen oder radialen Belastung. Die Berührungszone zwischen der eigentlichen Dichtlippe und der abgedichteten Gegenfläche ist aus diesem Grunde auf einen außerordentlich schmalen Linienzug beschränkt, der auch bei einer axialen Verlagerung der Dichtfläche nicht verlassen wird. Schmutzpartikel vermögen aus diesem Grunde nicht in den Bereich der kritischen Dichtungszone einzudringen. Eine ausreichende Schmierung ist durch die Beaufschlagung der Innenseite mit Öl gewährleistet.

Die Dichtlippe ist einstückig aus einem elastomeren Werkstoff des Stützringes herausgeformt und insofern biegeelastisch in sich selbst nachgiebig. Ihr Profil wird in radialer Richtung beiderseits der Dichtlippe elastisch abgestützt, und zwar einerseits durch die federelastischen Eigenschaften der Membrane, andererseits durch die federelastischen Eigenschaften des aus einem noch weicher eingestellten, gummielastischen Werkstoff des Andrückringes. Der Andrückring wird nur auf Druck belastet, nicht auf Biegung, und Relaxationserscheinungen vermögen aus diesem Grunde keinen nennenswerten Einfluß auf die Andrückung der Dichtlippe auszuüben.

Es ist wünschenwert, den Querschnitt und die Elastizität der Membrane mit den entsprechenden Eigenschaften und Abmessungen des Andrückringes so abzustimmen, daß sich der Lippenring bei einer Belastung der Dichtlippe ohne Kippbewegung in Richtung des Andrückringes bewegen läßt.

Eine absolute Sicherheit ist diesbezüglich jedoch mit den zur Verfügung stehenden Mitteln noch nicht erzielbar, insbesondere unter Berücksichtigung der unvermeidbar auftretenden Verschleiß- und Alterungserscheinungen. Es wurde aber gefunden, daß geringfügige Kippbewegungen offensichtlich ohne große praktische Nachteile sind, sofern gewährleistet ist, daß eine radiale Verlagerung der Dichtlippe bei einer entsprechenden axialen Zusammenpressung unterbleibt.

Eine diesbezügliche befriedigende Auslegung und Dimensionierung bereitet keine Schwierigkeiten. Letzte Abstimmungen kann der Fachmann unter Berücksichtigung der ihm vertrauten Werkstoffeigenschaften in wenigen Versuchen ermitteln.

Nach einer vorteilhaften Ausgestaltung ist es vorgesehen, daß der Andrückring mit einer sich in axialer Richtung erstreckenden Umgangsfläche in der Gehäusebohrung anliegt. Die auch bei einer axialen Verschiebung des Lippenringes erwünschte, unveränderliche Zuordnung zu der aufnehmenden Gehäusebohrung wird hierdurch wirksam unterstützt.

Der Andrückring kann mit einer sich in radialer Richtung erstreckenden ersten Stirnfläche an der entsprechend verlaufenden, ebenen Rückwand des Lippenringes anliegen. Einer Kippbewegung des Lippenringes bei einer axialen Verlagerung wird hierdurch wirksam entgegengewirkt. Der diesbezügliche Effekt läßt sich nochmals verstärken, wenn der Andrückring zugleich mit einer sich in radialer Richtung erstreckenden zweiten Stirnfläche rückseitig durch den Stützring abgestützt wird und an diesem anliegt. Die zweite Stirnfläche kann dabei auch im Bereich des Innenumfanges in eine Kegelfläche übergehen, die an einer entsprechend geformten Kegelfläche des Stützringes anliegt.

Bei Ausübung einer axial gerichteten Kraft auf die erste Stirnfläche ergibt sich in diesem Falle eine erhöhte Anpressung des Außenumfanges an die aufnehmende Gehäusebohrung, was ebenfalls zu einer lagemäßigen Stabilisierung der in radialer Richtung verlaufenden ersten Stirnfläche beiträgt.

Zur Erzielung eines solchen Effektes ist es vorteilhaft, wenn die einander gegenüberliegenden Kegelflächen des Andrück- und des Stützringes einen Kegelwinkel von 60 bis 120° einschließen. Ein Winkel von 80 bis 90° wird bevorzugt.

Gummielastische Werkstoffe an sich sind nur außerordentlich wenig kompressibel und es ist deshalb erforderlich, daß außerhalb der Kontaktflächen zwischen dem Andrückring, dem Stütz- bzw. Lippenring und der aufnehmenden Gehäusebohrung Freiflächen des Andrückringes vorhanden sind, in deren Bereich der gummielastische Werkstoff bei einer Erhöhung der Anpreßkräfte in den übrigen Bereichen auszuweichen vermag. Der flächenmäßige Anteil dieser Freiflächen an der gesamten Oberfläche des Andrückringes soll 10 bis 40 % betragen, vorzugsweise 25 bis 35 %.

Der Stützring einschließlich des Lippenringes besteht aus einem wesentlich härteren Werkstoff als der Andrückring. Als vorteilhaft hat es sich bewährt, wenn der Stützring aus einem gummielastischen Werkstoff besteht, dessen Härte, gemessen in ShoreA, 1,5 - bis 2,3 mal so groß ist wie die Härte des zugehörigen Andrückringes. Die Wahl eines entsprechenden Verhältnisses ermöglicht eine besonders günstige Dimensionierung der Querschnitte der einzelnen Teile. Das Eindringen von Staub- und Schmutzbestandteilen in Hinterschneidungen und Hohlräume wird durch eine entsprechende Kombination wirksam unterbunden.

Lippen- und Stützring der vorgeschlagenen Gelenkbolzendichtung bestehen aus einem elastomeren Werkstoff, dessen Härte vorzugsweise 90 bis 98 Shore A beträgt. Die Dichtlippe weist hierdurch eine große Verschleißfestigkeit auf. Sie wird infolge der starken Querschnittsverminderung im Bereich der Membrane und infolge der Abstützung durch den Andrückring aus einem weichelastischen Werkstoff weichelastisch federnd gegen die Abdichtfläche gedrückt, wodurch Beschädigungen infolge einer mechanischen Überlastung weitgehend unterdrückt werden. Die Gebrauchsdauer erfährt hierdurch eine wesentliche Steigerung.

Die in der Anlage beigefügte Zeichnung nimmt Bezug auf eine beispielhafte Ausführung der vorgeschlagenen Gelenkbolzendichtung in eingebautem Zustand. Die Gelenkbolzenabdichtung umgibt die abgedichtete Welle 3 rotationssymmetrisch und ist in halbgeschnittener Darstellung wiedergegeben.

Die Gelenkbolzendichtung besteht aus einem Stützring 7 aus einem gummielastischen Werkstoff, der im mittleren Bereich durch eine umlaufende Einkerbung des Außenumfanges zu einer Membrane 8 vermindert ist und in einen Lippenring 5 übergeht. Der Lippenring weist eine axial ausgerichtete Dichtlippe 6 auf, die mit einer scharfen Dichtkante an der sich in radialer Richtung erstreckenden Dichtfläche des abgedichteten Maschinenteiles 2 anliegt.

Der Lippenring 5, die Membrane 8 und der Stützring 7 sind einstückig ausgebildet und bestehen aus einem gummielastischen Werkstoff mit einer Shore A-Härte von 94. Die Verwendung von Polyurethanwerkstoffen für seine Herstellung hat sich ausgezeichnet bewährt.

In die Einkerbung zwischen dem Stützring 7 und dem Lippenring 5 ist ein Andrückring 9 eingeknüpft, der aus einem weichelastischen Gummiwerkstoff mit einer Härte ShoreA von ca. 50 besteht. Der Andrückring weist einen zylindrischen Außenumfang auf und liegt mit diesem unmittelbar an der Innenwandung der Gehäusebohrung an. Die axialen Begrenzungsflächen liegen einerseits an der sich in radialer Richtung erstreckenden rückwärtigen Fläche des Lippenringes an, andererseits auf der im abgedichteten Medium zugewandten Stirnfläche des Stützringes 7. Letztere ist im Bereich des Außenumfanges radial ausgerichtet, innerhalb dieses Bereiches hingegen kegelig in Richtung des abgedichteten Mediums verjüngt. Eine axiale Belastung der Dichtlippe 6 führt aus diesem Grunde zu einer erhöhten Anpressung des Außenumfanges gegen die aufnehmende Gehäusebohrung, wodurch einem Auswandern der Dichtlippe in radialer Richtung nach außen wirksam begegnet wird.

Das Verhältnis aus dem mittleren radialen Abstand B der Membrane 8 von der Dichtlippe und dem radialen Abstand C zwischen der Dichtlippe und der Mittellinie des Andrückringes 9, deren Breite mit D bezeichnet ist, beträgt im dargestellten Falle 1,0. Bei einer Verminderung des axialen Abstandes A zwischen der Distanzhülse 4 und dem abgedichteten Maschinenteil 2 resultiert aus diesem Verhältnis und der gegenseitigen maßlichen Abstimmung der aneinander anliegenden, elastischen Teile eine axiale Rückverlagerung des Lippenringes 5 ohne eine meßbare Veränderung des Durchmessers der Dichtlippe 6 oder eine Veränderung der beiderseitigen Winkel zwischen den Flankenflächen der Dichtlippe und der sich in radialer Richtung erstreckenden Fläche des abgedichteten Maschinenteiles 2. Die Innenwandung 10 des Stützringes 7 ist zylindrisch ausgebildet und trägt wesentlich zur Stabilisierung des radialen Abstandes der Dichtlippe 6 von der Rotationsachse bei.

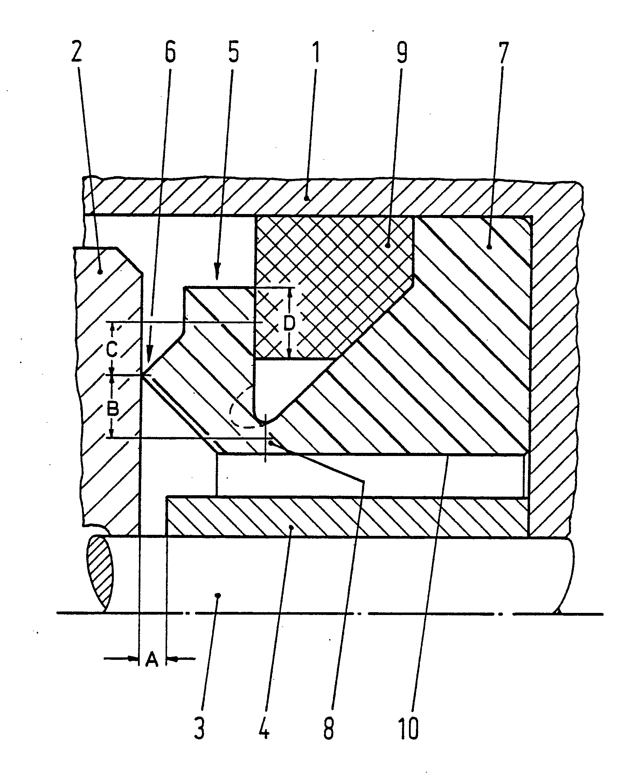

**Patentansprüche**

1. Gelenkbolzenabdichtung für eine Gleiskette, bestehend aus einem Stützring (7) aus einem härteren, gummielastischen Werkstoff, der festsitzend in eine Gehäusebohrung eingepreßt ist und der an der dem abgedichteten Medium zugewandten Grundfläche der Gehäusebohrung anliegt, der ein Profil aufweist, das auf der Innenseite in Richtung des abgedichteten Mediums verlängert ist und in einen nach außen vorspringenden Lippenring (5) übergeht, dessen Dichtlippe (6) von einem innerhalb des Profils angeordneten und die Gehäusebohrung, den Stützring und den Lippenring berührenden Andrückring (9) aus einem weicheren elastischen Werkstoff an die radiale Dichtfläche des relativ beweglichen Maschinenteiles (2) angepreßt wird, wobei der Stützring (7) eine im wesentlichen zylindrisch verlaufende Innenwandung (10) aufweist, dadurch gekennzeichnet, daß der Außendurchmesser des Stützringes an der Übergangsstelle in den Lippenring kerbartig zu einer gelenkartig wirksamen Membrane (8) verjüngt ist und daß das Verhältnis aus dem mittleren, radialen Abstand (B) der Membrane von der Dichtlippe und deren radialem Abstand (C) von der Mittellinie der Anlagefläche (D) des Andrückringes (9) 0,7 bis 1,4 beträgt, wobei die Abmessungen und die Elastizität der Membrane mit den entsprechenden Werten des Andrückringes so abgestimmt sind, daß sich der axiale Abstand des Lippenringes (5) ohne wesentliche Veränderung des Durchmessers der Dichtlippe (6) vermindern läßt.

2. Gelenkbolzendichtung nach Anspruch 1, dadurch gekennzeichnet, daß der Andrückring (9) mit einer sich in axialer Richtung erstreckenden Umfangsfläche an der Gehäusebohrung anliegt.

3. Gelenkbolzendichtung nach Anspruch 1 bis 2, dadurch gekennzeichnet, daß sich der Andrückring (9) mit einer sich in radialer Richtung erstreckenden ersten Stirnfläche an dem Lippenring (5) anliegt.

4. Gelenkbolzendichtung nach Anspruch 1 bis 3, dadurch gekennzeichnet, daß der Andrückring (9) mit einer sich in radialer Richtung erstreckenden zweiten Stirnfläche an dem Stützring (7) anliegt.

5. Gelenkbolzendichtung nach Anspruch 4, dadurch gekennzeichnet, daß die zweite Stirnfläche im Bereich des Innenumfanges des Andrückringes (9) in eine Kegelfläche übergeht, die an einer entsprechend geformten Kegelfläche des Stützringes (7) anliegt.

6. Gelenkbolzendichtung nach Anspruch 5, dadurch gekennzeichnet, daß die einander gegenüberliegenden Kegelflächen des Andrückringes (9) und des Stützringes (7) einen Kegelwinkel von 60 bis 120° einschließen.

7. Gelenkbolzendichtung nach Anspruch 1 bis 6, dadurch gekennzeichnet, daß der Stützring (7) aus einem gummielastischen Werkstoff mit einer Härte besteht, die gemessen in Shore A, 1,5- bis 2,3 mal so groß ist wie die Härte des zugehörigen Andrückringes (9).

**Claims**

1. A track pin seal comprising a support ring (7) made of a harder, rubber-elastic material which is pressed tightly into a housing bore and which sits against the housing bore base surface facing towards the sealed medium, the support ring having a profile which is extended on the inner side in the direction of the sealed medium and merges into an outwardly projecting lip ring (5), the sealing lip (6) of the lip ring (5) being pressed against the radial sealing surface of the relatively movable machine part (2) by a thrust ring (9) made of a softer elastic material which is arranged inside the profile and comes in contact with the housing bore, the support ring and the lip ring, the support ring (7) having an essentially cylindrically running inner wall (10), characterised in that at the area of transition into the lip ring the outside diameter of the support ring is tapered notch-like into a diaphragm (8) acting in articulated manner, and that the ratio between the centre radial distance (B) of the diaphragm from the sealing lip and the radial distance (C) of the latter from the centre line of the contact surface (D) of the thrust ring (9) is from 0.7 : 1 to 1.4 : 1, the dimensions and the elasticity of the diaphragm being adapted to the corresponding values of the thrust ring in such a way that the axial distance of the lip ring (5) can be reduced without any substantial change in the diameter of the sealing lip (6).

2. A track pin seal according to claim 1, characterised in that the thrust ring (9) has a peripheral surface extending in the axial direction and sits against the housing bore.

3. A track pin seal according to claim 1 or 2, characterised in that the thrust ring (9) has a first end face extending in the radial direction and sits against the lip ring (5).

4. A track pin seal according to claim 1, 2 or 3, characterised in that the thrust ring (9) has a second end face extending in the radial direction and sits against the support ring (7).

5. A track pin seal according to claim 4, characterised in that in the area of the inner periphery of the thrust ring (9) the second end face merges into a conical surface which sits against a correspondingly formed conical surface of the support ring (7).

6. A track pin seal according to claim 5, characterised in that the conical surfaces of the thrust ring (9) and the support ring (7), which conical surfaces are located opposite one another, enclose a cone angle of 60 to 120°.

7. A track pin seal according to any of claims 1 to 6, characterised in that the support ring (7) is made of a rubber-elastic material having a hardness which is 1.5 to 2.3 times as great as the hardness of the associated thrust ring (9), measured in Shore A.

**Revendications**

1. Joint d'étanchéité pour articulation de chenille, constitué d'une bague de support (7) réalisée en matériau dur et élastique à base de caoutchouc, qui est enfoncé à demeure dans un alésage de logement et qui prend appui sur la face du fond de l'alésage de logement tournée vers le fluide à contenir, qui présente un profil qui se prolonge sur la face intérieure, en direction du fluide à contenir et qui se continue par une bague à lèvre (5) faisant saillie vers l'extérieur et dont la lèvre d'étanchéité (6) est comprimée sur la surface d'étanchéité radiale de la pièce machine (2) à mouvement relatif par une bague de compression (9) disposée à l'intérieur du profil et au contact de l'alésage du logement de la bague de support et de la bague à lèvre, la bague de support (7) présentant une paroi intérieure (10) de forme essentiellement cylindrique, caractérisé en ce que le diamètre extérieur de la bague de support se prolonge dans la zone de transition dans la bague à lèvre par une entaille, pour devenir une membrane plus mince (8) ayant un effet d'articulation, et en ce que le rapport entre la distance radiale moyenne B de la membrane de la lèvre d'étanchéité et de la distance radiale C de celle-ci par rapport à la ligne médiane de la surface de contact D de la bague de compression (9) est de 0,7 à 1,4, tandis que les dimensions et l'élasticité de la membrane sont choisies en fonction des valeurs correspondantes de la bague de compression, en ce que la distance axiale de la bague à lèvre (5) est diminuée sans modification sensible du diamètre de la lèvre d'étanchéité (6).

2. Joint d'étanchéité pour articulation de chenille selon la revendication 1, caractérisé en ce que la bague de compression (9) prend appui sur l'alésage de logement par une surface périphérique s'étendant en direction axiale.

3. Joint d'étanchéité pour articulation de chenille selon les revendications 1 et 2, caractérisé en ce que la bague de compression (9) prend appui sur la bague à lèvre (5) par une première face frontale s'étendant en direction radiale.

4. Joint d'étanchéité pour articulation de chenille selon les revendications 1 à 3, caractérisé en ce que la bague de compression (9) prend appui sur la bague de support (7) par une seconde face frontale, s'étendant en direction radiale.

5. Joint d'étanchéité pour articulation de chenille selon la revendication 4, caractérisé en ce que la seconde face frontale se prolonge dans la zone de la périphérie intérieure de la bague de support (9) par une surface conique qui prend appui sur la surface conique ayant une forme correspondante de la bague de support (7).

6. Joint d'étanchéité pour articulation de chenille selon la revendication 5, caractérisé en ce que les surfaces coniques opposées l'une à l'autre de la bague de compression (9) et de la bague de support (7) définissent un angle de cône de 60 à 120°.

7. Joint d'étanchéité pour articulation de chenille selon les revendications 1 à 6, caractérisé en ce que la bague de support (7) est réalisée en matériau élastique à base de caoutchouc ayant une dureté qui, mesurée en Shore-A, est 1,5 à 2,3 fois plus grande que la dureté de la bague de compression (9) correspondante.